# EUROPÄISCHE PATENTSCHRIFT

(11) **EP 3 291 910 B1**
(45) Veröffentlichungstag und Bekanntmachung des Hinweises auf die Patenterteilung: **29.07.2026**
(21) Anmeldenummer: 16721399.0
(22) Anmeldetag: 01.05.2016
(51) Int. Cl.: B01D 47/05, B01D 47/06, B03C 3/017, B03C 3/41, B04C 5/30, B04C 9/00, B01D 45/16, F01N 3/04, F01N 3/01, F01N 3/037

(54) **ABGASBEHANDLUNGSEINRICHTUNG FÜR ABGAS EINER KLEINFEUERUNGSANLAGE UND VERFAHREN ZUR BEHANDLUNG VON ABGAS EINER KLEINFEUERUNGSANLAGE**
EXHAUST-GAS AFTERTREATMENT DEVICE FOR EXHAUST GAS OF A SMALL COMBUSTION PLANT, AND METHOD FOR THE TREATMENT OF EXHAUST GAS OF A SMALL COMBUSTION PLANT
DISPOSITIF DE TRAITEMENT DES GAZ BRÛLÉS ISSUS D'UNE PETITE INSTALLATION DE COMBUSTION ET PROCÉDÉ DE TRAITEMENT DES GAZ BRÛLÉS ISSUS D'UNE PETITE INSTALLATION DE COMBUSTION

(30) Priorität: 05.05.2015 DE 102015107015
(43) Veröffentlichungstag der Anmeldung: 14.03.2018
(73) Patentinhaber: Fraunhofer-Gesellschaft zur Förderung der angewandten Forschung e.V., 80686 München (DE)
(72) Erfinder: ALEYSA, Mohammadshayesh, 70565 Stuttgart (DE)
(86) Internationale Anmeldenummer: PCT/EP2016/059714
(87) Internationale Veröffentlichungsnummer: WO 2016/177652

(56) Entgegenhaltungen:
- DE-A1- 3 811 400
- US-A- 4 246 013
- US-A- 5 695 549
- US-A1- 2012 107 202

## Beschreibung

### Technisches Gebiet

Die Anmeldung betrifft eine Abgasbehandlungseinrichtung für Abgas einer Kleinfeuerungsanlage und ein zugehöriges Verfahren. Dabei sollen ein Agglomerator, insbesondere eine Ionisationskammer, und ein Fliehkraftabscheider kombiniert werden.

### Stand der Technik

Kleinfeuerungsanlagen werden zumeist mit Biomasse, insbesondere Holz, betrieben. Im Interesse einer günstigen Kohlendioxidbilanz werden diese daher oft gewünscht. Die übrigen Emissionen, insbesondere die Staubemissionen, gelten allerdings als gesundheitsschädlich und sollen daher verhindert werden. Daher bekommt die Abgasreinigung zunehmend Stellenwert.

Bekannt zur Entfernung von Partikeln sind Elektroabscheider. Bei Elektroabscheidern wird ein Hochspannungsfeld zwischen einer drahtförmigen Sprühelektrode und einer flächenförmigen Niederschlagselektrode erzeugt, in dem die sich im Abgasvolumenstrom befindenden Staubpartikel elektrisch aufgeladen und gleichzeitig aus dem Strom abgelenkt werden. Hierzu ist eine mit negativer Gleichspannung (von 30 bis 80 kV) beaufschlagte Sprühelektrode vorhanden, welche Elektronen emittiert, die die in der Umgebung befindlichen Gasmoleküle ionisieren. Die Staubpartikel werden durch den Ionenbeschuss (für Staubpartikel > 1 µm) oder die Ionendiffusion (für Staubpartikel < 0,5 µm) negativ aufgeladen und bewegen sich im angelegten elektrischen Feld quer zur Abgasströmung zur positiv geladenen Niederschlagselektrode.

Weiterhin sind Nassabscheider bekannt. Dort werden die Staubpartikel in Wassertropfen eingeschlossen und können dann aufgrund der Massenzunahme durch massenproportionale Kräfte besser aus dem Abgasvolumenstrom entfernt werden.

Schließlich sind Fliehkraftabscheider bekannt. Das zu trennende Gas/Feststoff-Gemisch, also das Abgas mit Partikeln, wird einem zylindrischen Behälter mit meist konischem Unterteil tangential oder axial zugeführt. Der Drall wird dabei entweder durch den tangentialen Eintritt des Gases erzeugt oder durch am Umfang des Zyklon-Gehäuses angebrachte Leitschaufeln. Durch die sich im Abscheideraum ausbildende Rotationsströmung wirken auf die Feststoffpartikel Fliehkräfte, die den Feststoff nach außen schleudern. Von der Wand des Fliehkraftabscheiders rutscht dieser Feststoff nach unten in einen Feststoffsammelbehälter. Das im Abscheiderinnenraum rotierende Gas wird nach oben durch ein zylindrisches oder konisches Tauchrohr abgeführt.

Damit stehen grundsätzlich leistungsfähige Abscheider zur Verfügung. Besonders bei Kleinfeuerungsanlagen dürfen die Kosten aber nicht zu hoch sein. Ferner ist der Bauraum beschränkt. Aufgabe der Erfindung ist daher eine Abgasbehandlungseinrichtung zu schaffen, welche technisch einfach und damit preisgünstig realisiert werden kann und wenig Bauraum benötigt. Ebenso ist ein zugehöriges Verfahren bereit zu stellen.

Aus der EP 2 868 880 A1 ist eine Abgasbehandlungseinrichtung bekannt, bei der eine Ionisationskammer und ein Fliehkraftabscheider vorhanden sind. Dabei erfolgt in der Ionisationskammer eine Abscheidung. In den Fliehkraftabscheider wird nur ein Teilstrom geführt, der eine besonders hohe Konzentration abgeschiedener Partikel aufweist.

Aus der US 5,695,549 A ist eine Abgasbehandlungseinrichtung für Kohlekraftwerke bekannt. Diese könnte auch zur Behandlung von Abgas einer Kleinfeuerungsanlage eingesetzt werden, Die Abgasbehandlungseinrichtung weist einen Agglomerator und einen dem Agglomerator nachgeschalteten Fliehkraftabscheider auf.

In der DE 38 11 400 A1 ist bekannt, dass durch Agglomeration des Staubs die Verbesserung der Abscheidung in einem Fliehkraftabscheider verbessert werden kann. In der DE 38 11 400 A1 werden auch die Grenzen der Abscheidung dargelegt. Zur Verbsserung der Abscheidung wird vorgeschlagen, einen Teilgasstrom mit einem möglichst hohen Staubgehalt aus einem Zyklon abzuzweigen und in einen anderen Zyklon zu führen.

Aus der US 4,246, 013 A ist ein Fliehkraftabscheider bekannt, bei dem ein Teil des Gasstroms nach Durchströmung des Fliehkraftabscheiders mit einer Abgasrückführungseinrichtung erneut durch den Fliehkraftabscheider geführt werden kann. Dazu ist eine Abscheideplatte vorgesehen, die mit einer Spindel bewegt werden kann, um den Anteil des erneut durch den Fliehkraftabscheiders strömenden Gases einzustellen. An der Spindel ist hierzu ein Griff angebracht.

Die Lösung dieser Aufgabe findet sich insbesondere in den unabhängigen Ansprüchen. Die abhängigen Ansprüche liefern vorteilhafte Weiterentwicklungen. Der Beschreibung und der Zeichnung sind weitere Informationen zu entnehmen.

Es wurde erkannt, dass eine Abgasbehandlungseinrichtung für Abgas einer Kleinfeuerungsanlage, gemäß Anspruch 1, aufweisend einen Agglomerator und einen dem Agglomerator nachgeschalteten Fliehkraftabscheider bereit zu stellen ist. Der Fliehkraftabscheider ist derart nachgeschaltet, dass das durch den Agglomerator strömende Abgas vollständig in den Fliehkraftabscheider strömt. Dabei ist der Agglomerator ausgebildet, das Agglomerationsverhalten von Partikeln zu verbessern. Der Fliehkraftabscheider weist eine Abgasrückführeinrichtung auf, mit der nach Durchströmung des Fliehkraftabscheiders ein Teil des Abgases wieder zum Eingangsbereich des Fliehkraftabscheiders geführt werden kann, um einen gewünschten Volumenstrom im Fliehkraftabscheider zu ermöglichen. Soweit von Partikeln gesprochen wird, handelt es sich vorliegend meist um Staubpartikel.

Es ist also eine Kombination zweier bekannter Abgasbehandlungseinrichtungen, also einem Agglomerator und einem Fliehkraftabscheider vorgesehen.. Es hat sich eine hohe Abgasgeschwindigkeit von mehr als 3m/s, möglich sind auch 30 m/s bis 40 m/s, als sinnvoll erwiesen. Die eigentliche Abscheidung der Partikel erfolgt erst im Fliehkraftabscheider. Durch die Agglomeration kann dort die Abscheidung weitgehend unabhängig von der Dichte der Partikel erfolgen.

Das Abgas strömt hierzu aus dem Agglomerator in den Fliehkraftabscheider. Es sind verschiedene Anordnungen als Fliehkraftabscheider denkbar. Die gängige Anordnung weist einen Kegel auf, der sich in Einbaulage nach unten verjüngt. Von oben ragt ein Tauchrohr in den Kegel. Das Gas mit den Partikeln, vorliegend mit den agglomerierten Partikeln, strömt oben seitlich ein und fließt rotierend um das Tauchrohr im sich verjüngenden Kegel nach unten. Durch die Fliehkraft gelangen die Partikel an die Kegelwand. Das von den Partikeln gereinigte Gas verlässt durch das Tauchrohr den Fliehkraftabscheider. Neben der Fliehkraft kann auch die von der Aufladung der Partikel herrührende elektrische Kraft die Abscheidung begünstigen.

Wie erwähnt ist vorliegend zum stabilen Betrieb eine Abgasrückführeinrichtung vorhanden, mit der nach Durchströmung des Fliehkraftabscheiders ein Teil des Abgases wieder zum Eingangsbereich des Fliehkraftabscheiders geführt werden kann. Dies erlaubt den durch den Fliehkraftabscheider strömenden Volumenstrom in gewünschter Weise einzustellen. Damit kann bei unterschiedlichen Betriebsbedingungen der Kleinfeuerungsanlage ein gewünschter Volumenstrom und somit eine gewünschte Geschwindigkeit des Abgases eingestellt werden. Dies hat sich in der vorliegenden Kombination von Agglomerator und Fliehkraftabscheider als entscheidend erwiesen.

In den Schriften DE 32 38 793 C2, DE 35 00 373 C2 und EP 0824376 B1 sind Abgasbehandlungseinrichtungen für die Motorentechnik und für Brennkraftmaschinen beschrieben. Dabei wurde nicht konsequent auf eine Abgasrückführeinrichtung gesetzt. Es hat sich aber herausgestellt dass es zumindest bei Kleinfeuerungsanlagen entscheidend auf eine Abgasrückführeinrichtung ankommt. In diesem Zusammenhang wird auch darauf hingewiesen, dass in Motoren die Verbrennung bei anderen Parametern, insbesondere bei höheren Drücken, als in Kleinfeuerungsanlagen erfolgt. Abgasbehandlungseinrichtungen für Abgase aus Motoren sind daher nicht ohne weiteres für Kleinfeuerungsanlagen geeignet.

Neben der Abscheidung von Staub, sowohl organischer als auch anorganischer Art, hat sich das Verfahren auch zur Abscheidung von gasförmigen Schadstoffen, wie NOₓ, SO₂ und HCl als brauchbar erwiesen. Nach derzeitiger Kenntnislage ist die Abgasbehandlungseinrichtung so ausgelegt, dass es nach dem vorläufigen DiBt-Prüfprogramm für die Zulassung von Staubabscheidern zugelassen werden kann.

Bei dem Fliehkraftabscheider kann das Tauchrohr sowohl im oberen als auch unteren Bereich angeordnet werden. Außerdem kann ein Zyklon mit axialem oder mit tangentialem Einlauf eingesetzt werden. Axialzyklone eignen sich sehr gut für die Abscheidung von Tropfen, da hier durch die gleichmäßige Flüssigkeitsverteilung auf dem Umfang des Zyklons die Bildung dicker Strähnen und damit ein Wiederaufwirbeln bereits abgeschiedener Flüssigkeit weitgehend vermieden werden.

Durch die vorliegende Kombination des Agglomerators und des Fliehkraftabscheiders sind Abgasgeschwindigkeiten von 30 m/s bis 40 m/s möglich, während klassische Elektroabscheider mit Abgasgeschwindigkeiten von 0,05 m/s bis 1 m/s arbeiten. Durch die bedeutend höheren Abgasgeschwindigkeiten können wesentlich niedrigere Querschnitte gewählt werden, um den gleichen Abgasstrom zu ermöglichen. Damit kann trotz der Kombination zweier Bauteile, Agglomerator und Fliehkraftabscheider, der erforderliche Bauraum deutlich eingeschränkt werden.

In einer Ausführungsform der Erfindung ist der Agglomerator eine Ionisationskammer. Diese soll allerdings nicht in der klassischen Betriebsweise einer Ionisationskammer betrieben werden, bei der der Staub abgeschieden wird. Vielmehr genügt es die Ionisationskammer so auszulegen, dass eine negative Aufladung der Partikel derart erfolgt, dass die Partikel Agglomerate bilden.

Neben der negativen Aufladung in einer Ionisationskammer gibt es alternativ oder zusätzlich auch andere Möglichkeiten die Agglomeration zu bewirken. So eignen sich Schallwellen mit geeigneten Frequenzen. Auch eine geeignete Turbulenz der Strömung, zumindest in Teilbereichen, kann die Agglomeration bewirken. Meist handelt es sich dabei um starke Turbulenz. Die Agglomeration kann auch thermisch bewirkt werden. Hierzu sind entsprechende Heizelemente vorzusehen.

In einer Ausführungsform der Erfindung ist vorgesehen, dass in das Abgas Flüssigkeit eingebracht werden kann, insbesondere im Eingangsbereich des Fliehkraftabscheiders. Im Regelfall handelt es sich dabei um Wasser. Gerade Wasser kann insbesondere als Nebel oder Dampf eingebracht werden. Dadurch kann die Abscheidung weiter verbessert werden. Dies liegt wesentlich daran, dass die aufgeladenen Partikel an und in Wassertropfen gebunden werden. Dabei ist es möglich so viel Flüssigkeit einzubringen, dass die Partikel, im Regelfall die agglomerierten Partikel, gleichsam ausgespült werden. Dabei werden im Fliehkraftabscheider die Partikel mit den Wassertropfen an die Wand des Fliehkraftabscheiders geschleudert. Die Flüssigkeit fließt dann an den Boden des Fliehkraftabscheiders. Es ist möglich die Flüssigkeit zu reinigen und wiederzuverwenden, also erneut in das Abgas einzubringen.

Das Einbringen von Flüssigkeit ermöglicht auch aggressive Abgase wie z. B: HCl, HF, NOx und SOx durch Waschen mitabzuscheiden. Der Überschuss an Waschflüssigkeit kann im geschlossenen Wasserkreislauf geführt werden.

In einer Ausführungsform ist zur Einbringung von Flüssigkeit in das Abgas eine Nebel- und/oder Dampfdüse vorhanden. Damit kann Flüssigkeit gut im Abgas verteilt werden.

Unabhängig von der Einbringung von Flüssigkeit in das Abgas kann Flüssigkeit auch zur Reinigung des Fliehkraftabscheiders von abgeschiedenen Partikeln dienen. Es ist auch nicht erforderlich Flüssigkeit an die Kanalisation abzugeben. Bei Verwendung von Wasser kann Wasserdampf abgegeben werden. Die abgeschiedenen Partikel führen zu einer Schlammmasse, welche über eine Öffnung entnommen werden kann.

In einer Ausführungsform ist die Abgasrückführeinrichtung geeignet, einen konstanten Volumenstrom im Fliehkraftabscheider zu ermöglichen. Wie bereits erwähnt hat es sich als wichtig herausgestellt den Volumenstrom im Fliehkraftabscheider einzustellen. Dabei gibt es häufig einen optimalen Volumenstrom. Dann ist es sinnvoll eben diesen Volumenstrom durchgängig zu wählen, also einen konstanten Volumenstrom einzustellen. Fällt aus der Kleinfeuerungsanlage mehr Abgas an, dann ist entsprechend weniger oder gar kein Abgas durch die Rückführeinrichtung zu führen.

In einer Ausführungsform ist zwischen Agglomerator und Fliehkraftabscheider ein Isolator angeordnet. Angesichts der hohen elektrischen Spannungen bei Nutzung einer Ionisationskammer als Agglomerator ist dies vorteilhaft.

In einer Ausführungsform ist zur Absaugung des Abgases aus dem Fliehkraftabscheider ein Saugzuggebläse vorhanden. Damit kann das Abgas gezielt durch das Tauchrohr abgesaugt werden. Dies trägt zu einem stabilen Betrieb der Abgasbehandlungseinrichtung bei. Es kann sich ferner auf den Betrieb der Kleinfeuerungsanlage auswirken. Es ist häufig ohnehin so, dass die Kleinfeuerungsanlage erheblich durch das Saugzuggebläse der Abgasbehandlungseinrichtung gesteuert wird. In einer Ausführungsform ist zur Abscheidung von Wassertropfen von aus dem Fliehkraftabscheider austretenden Abgas ein Tropfenabscheider vorhanden. Trotz der Abscheidung im Fliehkraftabscheider kann das Abgas nach Verlassen des Fliehkraftabscheiders noch Tropfen aufweisen. Diese sollen nicht in die Umgebung gelangen. Dafür dient der Tropfenabscheider.

In einer Ausführungsform ist in dem Agglomerator eine Sprühelektrode vorhanden. Eine Sprühelektrode eignet sich in besonderer Weise dazu, die Partikel soweit aufzuladen, dass eine Agglomeration erfolgt. Dies gilt freilich vor allem in einem als Ionisationskammer ausgebildeten Agglomerator.

Die Erfindung betrifft auch ein Verfahren zur Behandlung von Abgas aus einer Kleinfeuerungsanlage, gemäß Anspruch 10, bei dem im Abgas zunächst in einem Agglomerator Partikel zumindest teilweise agglomeriert werden und das Abgas vollständig einem Fliehkraftabscheider zugeführt wird. Im Fliehkraftabscheider werden Partikel abgeschieden. Dabei wird im Fliehkraftabscheider ein gewünschter Volumenstrom eingestellt, indem bei Bedarf ein Teil des am Ausgang des Fliehkraftabscheiders austretenden Volumenstroms am Eingang des Fliehkraftabscheiders dem Fliehkraftabscheider zugeführt wird.

In einer Ausführungsform wird zur Agglomeration der Partikel das Abgas im als Ionisationskammer ausgebildeten Agglomerator zumindest teilweise ionisiert. Dadurch kann die Agglomeration in geeigneter Weise bewirkt werden. Wie weiter oben ausgeführt stehen freilich noch andere Möglichkeiten zur Agglomeration zur Verfügung.

In einer Ausführungsform wird vor oder bei Eintritt des Abgases in den Fliehkraftabscheider dem Abgas Flüssigkeit, in der Regel Wasser, zugeführt. Wenngleich ein Betrieb ohne Flüssigkeit auch möglich ist, kann im Regelfall durch die Zugabe von Flüssigkeit die Abscheiderate weiter verbessert werden. Die nasse Betriebsweise führt also zu Vorteilen gegenüber der trockenen Betriebsweise. Es ist auch eine Betriebsweise denkbar, welche als quasitrockene Betriebsweise bezeichnet wird. In dieser Betriebsweise wird nur so viel Flüssigkeit zugegeben, dass eine Befeuchtung der Partikel und eine bessere Abscheidung erfolgt. Es wird aber nicht so viel Flüssigkeit zugegeben, dass an der Wand des Fliehkraftabscheiders Flüssigkeit nach unten rinnt. Dies wirkt zunächst effizient. Allerdings besteht die Gefahr, dass die feuchten Partikel an der Wand des Fliehkraftabscheiders kleben bleiben und der Fliehkraftabscheider nach überschaubarer Betriebszeit gereinigt werden muss.

In einer Ausführungsform enthält die zugeführte Flüssigkeit Calciumhydroxid. Dies fördert die Bindung der im Fliehkraftabscheider abgeschiedenen Partikel, vor allem der Aschepartikel. Damit kann erreicht werden, dass die mit Hilfe der Flüssigkeit abgeschiedenen Partikel aus der Flüssigkeit problemlos entfernt werden können. So kann die an den Boden des Fliehkraftabscheiders fließende Flüssigkeit, im Regelfall das Wasser, leichter gereinigt werden. Bei der Reinigung werden die agglomerierten und mit Calciumhydroxid gut gebundenen Partikel aus der Flüssigkeit entfernt. Anschließend kann eine Lagerung, etwa in Säcken erfolgen. Zum Abtransport aus der Kleinverbrennungsanlage, etwa zu einem Müllsammelplatz kann ein Schneckenförderer eingesetzt werden. Wie bereits erwähnt kann die Flüssigkeit nach Reinigung erneut verwendet werden.

In einer Ausführungsform erfolgt das Verfahren unter Nutzung der oben beschriebenen Abgasbehandlungseinrichtung.

An dieser Stelle ein paar Ausführungen zur nassen Betriebsweise. Dabei wird Wasser als Waschmittel über den gesamten Betrieb durch eine Nebel-, Dampf- oder Spüldüse in den Abgasvolumenstrom im Eingangsbereich des Fliehkraftabscheiders zugegeben. Dabei ist das Waschwasser zum Abgasvolumenstrom so zuzugeben, dass eine große Phasengrenzfläche zwischen dem Abgas und dem Waschwasser erzeugt wird. Zum Transport der Partikel an die Flüssigkeitsoberfläche tragen Trägheits- und Diffusionskräfte sowie Kondensationskräfte bei. Bei einer Unterschreitung des Taupunktes wirken feinste Partikel als Kondensationskeime, die zur Verstärkung der Massenzunahme und somit zur Begünstigung der Partikelabscheidung führen. Der Transport der Partikel an die Flüssigkeitsoberfläche wird durch die Rotation im Fliehkraftabscheider begünstigt. Bei der Vorionisierung der Staubpartikel tragen noch die elektrischen Kräfte zum optimalen Transport und besseren Bindung der Feinstaubpartikel mit den Wassertropfen bei. In der Regel haben die Wassertropfen keine eigene elektrische Ladung, aber die negativ geladenen Staubpartikel induzieren eine komplementäre Ladung in den Wassertropfen. Die Elektronen im Wassertropfen können sich etwas bewegen. Wenn die negativ geladenen Partikel in die Nähe der Wassertropfen kommen, stoßen sie die Elektronen ab, so dass die Wassertropfen in der Nähe der Partikel positiv geladen werden. Die Anziehung zwischen dieser positiven Ladung und den negativ geladenen Partikeln resultiert in einer Kraft, die auf die Wassertropfen wirkt und sie so anzieht, so dass die Partikel besser am und im Wassertropfen gebunden werden können.

Die sich im Abgasstrom befindenden und negativ aufgeladenen Partikel lassen sich besser in Wassertropfen eingeschlossen und dann aufgrund der Massenzunahme durch massenproportionale Kräfte bzw. durch die Fliehkraft aus dem Abgasvolumenstrom in dem Fliehkraftabscheider entfernen. Die negative Aufladung der Partikel sorgt dafür, dass die Bindung der Staubpartikel am und im Wassertropfen besser stattfindet und somit ein höherer Abscheidegrad, vor allem für feine organische Staubpartikel, erreicht werden kann.

Bei nasser Arbeitsweise werden keine mechanische Reinigungseinrichtungen wie Klopfwerke zur Abreinigung der Sprüh-/Niederschlagssysteme benötigt. Auf den Niederschlagselektroden bildet sich unter Einwirkung des elektrischen Feldes ein Flüssigkeitsfilm, der ununterbrochen abläuft. Vorhandene Partikel werden hierdurch als Suspension ausgetragen. Falls erforderlich kann zur Gassättigung ein zusätzliches System von kontinuierlich arbeitenden Nebeldüsen vorgesehen werden. Dieses ist insbesondere bei höherem Feststoffgehalt von Vorteil. Schlammablagerungen auf den Niederschlagselektroden sind dadurch zu vermeiden. Durch die zusätzlichen Nebeldüsen wird der Flüssigkeitsfilm auf dem Elektrodensystem verstärkt und seine Feststoffkonzentration herabgesetzt. Die Filter werden in vorgegebenen Intervallen durch Spüldüsen abgereinigt. Die erreichbaren Reingasstaubgehalte liegen bei 1 mg/m³.

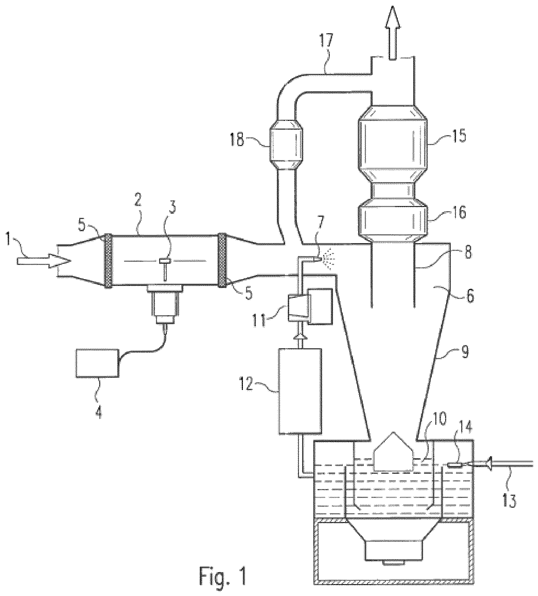

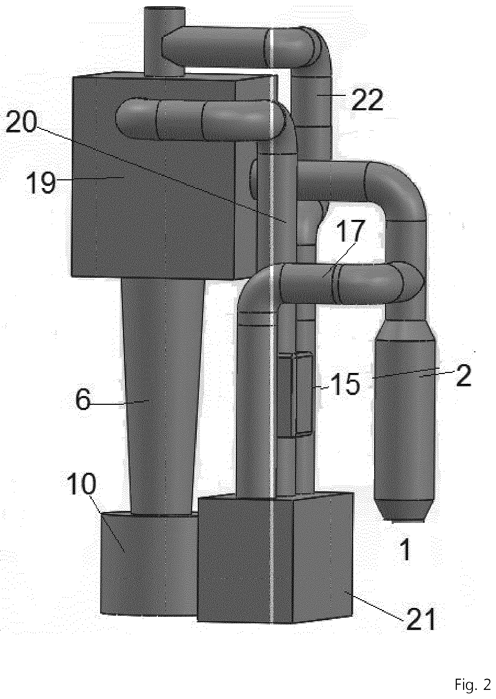

Anhand der Figuren sollen weitere Details der Erfindung erläutert werden. Fig. 1 zeigt schematisch eine Abgasbehandlungseinrichtung. Figur 2 ist eine perspektivische schematische Ansicht, die weitere Details zeigt.

Das aus der nicht dargestellten Kleinfeuerungsanlage stammende Abgas 1, an dieser Stelle auch als Rohgas zu bezeichnen, tritt zunächst in den Agglomerator 2, der als Ionisationskammer ausgebildet ist. In der Ionisationskammer 2 befindet sich eine Sprühelektrode 3. Die Sprühelektrode 3 wird von einer Hochspannungsversorgung 4 versorgt, so dass Hochspannung angelegt werden kann. Die Ionisationskammer 2 ist durch einen Isolator vom Fliehkraftabscheider 6 getrennt. Im Eingangsbereich des Fliehkraftabscheiders 6 befindet sich eine Nebeldüse 7, mit der als Flüssigkeit dienendes Wasser in das Abgas 1 eingesprüht wird. Das Abgas 1 strömt dann im Fliehkraftabscheider weiter und strömt rotierend um ein Tauchrohr 8, das in den Fliehkraftabscheider 6 von oben hineinragt, in den unteren Bereich des Fliehkraftabscheiders 6. Im Abgas 1 enthaltene Tropfen, Partikel, agglomerierte Partikel und Tropfen, welche Partikel und agglomerierte Partikel enthalten, werden durch die Fliehkraft an die Wand 9 des Fliehkraftabscheiders 6 gedrückt und strömen an der Wand 9 in den Sumpf 10 des Fliehkraftabscheiders 6. Dort befindliches Wasser wird von einer Wasserpumpe 11 durch einen Abwasserfilter 12, der einen Neutralisator aufweist, zur Nebeldüse 7 geleitet und wieder in das Abgas 1 eingesprüht. Über eine Zufuhrleitung kann Frischwasser 13 zugeführt werden. Die Zufuhr wird durch ein Floatventil 14 gesteuert. Die Abfuhr des Abgases 1 wird durch ein Saugzuggebläse 15 gesteuert. Das Abgas 1 wird dabei durch einen Tropfenabscheider 16 geführt, in dem noch im Abgas 1 vorhandene Tropfen abgeschieden werden. Aus dem Saugzuggebläse 15 austretendes Abgas 1 tritt als sogenanntes Reingas in die Umgebung.

Ein Teil des Abgases kann durch eine als Abgasrückführeinrichtung dienende Leitung 17, in der ein Rückführgebläse 18 angeordnet ist, wieder in den Eingangsbereich des Fliehkraftabscheiders 6 geführt werden. Damit kann unabhängig von dem aus der Kleinfeuerungsanlage kommenden Abgasstrom ein für den Betrieb des Fliehkraftabscheiders 6 optimaler Abgasstrom eingestellt werden.

In Fig. 2 ist eine perspektivische Darstellung der Abgasreinigung, die weitere Einzelheiten aufzeigt. Das aus der nicht dargestellten Kleinfeuerungsanlage kommende Abgas 1 strömt in den Agglomerator 2. Von dort strömt es in den Fliehkraftabscheider 6, genauer gesagt durch eine Funktionseinheit 19 in den Fliehkraftabscheider 6. Im Fliehkraftabscheider 6 erfolgt die oben beschriebene rotierende Strömung von oben nach unten zur Reinigung des Abgases. Durch das in Fig. 2 nicht ersichtliche Tauchrohr 8 strömt das Abgas wieder in die Funktionseinheit 19. Die Abgaswege in der Funktionseinheit 19 sind getrennt; es erfolgt also keine Mischung des in den Fliehkraftabscheider 6 und des aus dem Fliehkraftabscheider 6 strömenden Abgases 1 in der Funktionseinheit 19. Die Funktionseinheit 19 dient, wie nachfolgend erläutert wird, auch als Wärmetauscher.

Aus der Funktionseinheit 19 wird das Abgas 1 mit dem Saugzuggebläse 15 durch ein Rohr 20 zur Verteilungseinheit 21 gefördert. Ein Teil des Abgases 1 wird durch die Rückführleitung 17 wieder zum Fliehkraftabscheider 6 geführt. Der andere Teil, in der Regel der Hauptteil, des Abgases strömt durch ein Rohr 22 in die Umgebung. Dabei kann in der Funktionseinheit 21 eine Erwärmung erfolgen, um zu niedrige Abgastemperaturen zu vermeiden.

## Patentansprüche

1. Abgasbehandlungseinrichtung für Abgas (1) einer Kleinfeuerungsanlage, aufweisend einen Agglomerator (2) und einen dem Agglomerator (2) derart nachgeschalteten Fliehkraftabscheider (6), dass das durch den Agglomerator(2) strömende Abgas(1) vollständig in den Fliehkraftabscheider (6) strömt, wobei der Agglomerator(2) ausgebildet ist, das Agglomerationsverhalten von Partikeln zu verbessern, **dadurch gekennzeichnet, dass** der Fliehkraftabscheider (6) eine Abgasrückführeinrichtung (17, 18, 21) dienende Leitung (17), in der ein Rückführgebläse (18) angeordnet ist, aufweist, mit der nach Durchströmung des Fliehkraftabscheiders (6) ein Teil des Abgases (1) wieder zum Eingangsbereich des Fliehkraftabscheiders (6) geführt werden kann, um bei unterschiedlichen Betriebsbedingungen der Kleinfeuerungsanlage einen gewünschten Volumenstrom im Fliehkraftabscheider (6) zu ermöglichen.

2. Abgasbehandlungseinrichtung nach Anspruch 1, **dadurch gekennzeichnet, dass** der Agglomerator eine Ionisationskammer(2) ist.

3. Abgasbehandlungseinrichtung nach Anspruch 1, **dadurch gekennzeichnet, dass** in das Abgas (1) Flüssigkeit (13), insbesondere als Nebel oder Dampf eingebracht werden kann, insbesondere im Eingangsbereich des Fliehkraftabscheiders (6),

4. Abgasbehandlungseinrichtung nach dem vorhergehenden Anspruch, **dadurch gekennzeichnet, dass** zur Einbringung von Flüssigkeit (13) in das Abgas (1) eine Nebel-und/oder/Dampfdüse (7) vorhanden ist.

5. Abgasbehandlungseinrichtung nach Anspruch 1, **dadurch gekennzeichnet, dass** die Abgasrückführeinrichtung (17, 18, 21) geeignet ist einen konstanten Volumenstrom im Fliehkraftabscheider (6) zu ermöglichen.

6. Abgasbehandlungseinrichtung nach einem dervorhergehenden Ansprüche, **dadurch gekennzeichnet, dass** zwischen Agglomerator(2) und Fliehkraftabscheider (6) ein Isolator (5) angeordnet ist.

7. Abgasbehandlungseinrichtung nach einem dervorhergehenden Ansprüche, **dadurch gekennzeichnet, dass** zur Absaugung des Abgases (1) aus dem Fliehkraftabscheider (6) ein Saugzuggebläse (15) vorhanden ist.

8. Abgasbehandlungseinrichtung nach einem der vorhergehenden Ansprüche, **dadurch gekennzeichnet, dass** zur Abscheidung von Wassertropfen von aus dem Fliehkraftabscheider austretenden Abgas (1) ein Tropfenabscheider(16) vorhanden ist.

9. Abgasbehandlungseinrichtung nach einem dervorhergehenden Ansprüche, **dadurch gekennzeichnet, dass** in dem Agglomerator(2) eine Sprühelektrode (3) vorhanden ist.

10. Verfahren zur Behandlung von Abgas (1) aus einer Kleinfeuerungsanlage, wobei eine Abgasbehandlungsvorrichtung gemäß Anspruch 1 verwendet wird, bei dem im Abgas (1) zunächst in einem Agglomerator(2) Partikel zumindest teilweise agglomeriert werden und das Abgas anschließend vollständig einem Fliehkraftabscheider (6) zugeführt wird, wobei in dem Fliehkraftabscheider (6) Partikel abgeschieden werden, wobei im Fliehkraftabscheider (6) ein gewünschter Volumenstrom eingestellt wird, indem bei Bedarf ein Teil des am Ausgang des Fliehkraftabscheiders (6) austretenden Volumenstroms am Eingang des Fliehkraftabscheiders (6) dem Fliehkraftabscheider (6) zugeführt wird.

11. Verfahren nach Anspruch 10, **dadurch gekennzeichnet, dass** zur Agglomeration der Partikel das Abgas im als Ionisationskammer(2) ausgebildeten Agglomerator zumindest teilweise ionisiert wird.

12. Verfahren nach einem der Ansprüche 10 oder 11, **dadurch gekennzeichnet, dass** vor oder bei Eintritt des Abgases (1) in den Fliehkraftabscheider dem Abgas (1) Flüssigkeit (13) zugeführt wird.

13. Verfahren nach dem vorhergehenden Anspruch, **dadurch gekennzeichnet, dass** die zugeführte Flüssigkeit (13) Calciumhydroxid enthält.

14. Verfahren nach einem der Ansprüche 10 bis 13, **dadurch gekennzeichnet, dass** das Verfahren mit einer Abgasbehandlungseinrichtung nach einem der Ansprüche 1 bis 9 durchgeführt wird.

## Claims

1. An exhaust-gas treatment device for exhaust gas (1) of a small combustion plant, having an agglomerator (2) and a centrifugal separator (6) arranged downstream of the agglomerator (2) in such a manner that the exhaust gas (1) flowing through the agglomerator (2) flows completely into the centrifugal separator (6), wherein the agglomerator (2) is designed to improve the agglomeration behaviour of particles, **characterized in that** the centrifugal separator (6) has a line (17) that serves as an exhaust-gas recirculation device (17, 18, 21), in which a recirculation fan (18) is arranged, by means of which, after flowing through the centrifugal separator (6), a part of the exhaust gas (1) can be guided back to the inlet region of the centrifugal separator (6) in order to enable a desired volume flow in the centrifugal separator (6) under different operating conditions of the small combustion plant.

2. The exhaust-gas treatment device according to Claim 1, **characterized in that** the agglomerator is an ionization chamber (2).

3. The exhaust-gas treatment device according to Claim 1, **characterized in that** liquid (13), in particular as mist or steam, can be introduced into the exhaust gas (1), in particular in the inlet region of the centrifugal separator (6).

4. The exhaust-gas treatment device according to the preceding claim, **characterized in that** a mist and/or/or steam nozzle (7) is present for introducing liquid (13) into the exhaust gas (1).

5. The exhaust-gas treatment device according to Claim 1, **characterized in that** the exhaust-gas recirculation device (17, 18, 21) is suitable for enabling a constant volume flow in the centrifugal separator (6).

6. The exhaust-gas treatment device according to any one of the preceding claims, **characterized in that** an insulator (5) is arranged between agglomerator (2) and centrifugal separator (6).

7. The exhaust-gas treatment device according to any one of the preceding claims, **characterized in that** an induced draught fan (15) is present for extracting the exhaust gas (1) from the centrifugal separator (6).

8. The exhaust-gas treatment device according to any one of the preceding claims, **characterized in that** a droplet separator (16) is present for separating water droplets from exhaust gas (1) emerging from the centrifugal separator.

9. The exhaust-gas treatment device according to any one of the preceding claims, **characterized in that** a discharge electrode (3) is present in the agglomerator (2).

10. A method for treating exhaust gas (1) from a small combustion plant, wherein an exhaust-gas treatment device according to Claim 1 is used, in which, in the exhaust gas (1), particles are initially at least partially agglomerated in an agglomerator (2) and the exhaust gas is subsequently fed completely to a centrifugal separator (6), wherein particles are separated in the centrifugal separator (6), wherein a desired volume flow is set in the centrifugal separator (6) in that, if required, a part of the volume flow emerging at the outlet of the centrifugal separator (6) is fed to the centrifugal separator (6) at the inlet of the centrifugal separator (6).

11. The method according to Claim 10, **characterized in that**, for the agglomeration of the particles, the exhaust gas is at least partially ionized in the agglomerator in the form of an ionization chamber (2).

12. The method according to any one of Claims 10 and 11, **characterized in that** liquid (13) is supplied to the exhaust gas (1) before or when the exhaust gas (1) enters the centrifugal separator.

13. The method according to the preceding claim, **characterized in that** the liquid (13) supplied comprises calcium hydroxide.

14. The method according to any one of Claims 10 to 13, **characterized in that** the method is carried out with an exhaust-gas treatment device according to any one of Claims 1 to 9.

## Revendications

1. Dispositif de traitement des gaz d'échappement pour gaz d'échappement (1) d'une petite installation de combustion, présentant un agglomérateur (2) et un séparateur centrifuge (6) disposé en aval de l'agglomérateur (2) de telle sorte que les gaz d'échappement (1) traversant l'agglomérateur (2) s'écoulent entièrement dans le séparateur centrifuge (6), l'agglomérateur (2) étant conçu pour améliorer le comportement d'agglomération de particules, **caractérisé en ce que** le séparateur centrifuge (6) présente une conduite (17) servant de dispositif de recirculation des gaz d'échappement (17, 18, 21), dans laquelle est disposé un ventilateur de recirculation (18), au moyen de laquelle, après traversée du séparateur centrifuge (6), une partie des gaz d'échappement (1) peut être ramenée vers la zone d'entrée du séparateur centrifuge (6), afin de permettre un débit volumique souhaité dans le séparateur centrifuge (6) dans différentes conditions de fonctionnement de la petite installation de combustion.

2. Dispositif de traitement des gaz d'échappement selon la revendication 1, **caractérisé en ce que** l'agglomérateur est une chambre d'ionisation (2).

3. Dispositif de traitement des gaz d'échappement selon la revendication 1, **caractérisé en ce qu'**un liquide (13), notamment sous forme de brouillard ou de vapeur, peut être introduit dans les gaz d'échappement (1), notamment dans la zone d'entrée du séparateur centrifuge (6).

4. Dispositif de traitement des gaz d'échappement selon la revendication précédente, **caractérisé en ce qu'**une buse de brouillard et/ou de vapeur (7) est prévue pour l'introduction de liquide (13) dans les gaz d'échappement (1).

5. Dispositif de traitement des gaz d'échappement selon la revendication 1, **caractérisé en ce que** le dispositif de recirculation des gaz d'échappement (17, 18, 21) est apte à permettre un débit volumique constant dans le séparateur centrifuge (6).

6. Dispositif de traitement des gaz d'échappement selon l'une quelconque des revendications précédentes, **caractérisé en ce qu'**un isolateur (5) est disposé entre l'agglomérateur (2) et le séparateur centrifuge (6).

7. Dispositif de traitement des gaz d'échappement selon l'une quelconque des revendications précédentes, **caractérisé en ce qu'**un ventilateur d'extraction (15) est prévu pour aspirer les gaz d'échappement (1) hors du séparateur centrifuge (6).

8. Dispositif de traitement des gaz d'échappement selon l'une quelconque des revendications précédentes, **caractérisé en ce qu'**un séparateur de gouttelettes (16) est prévu pour séparer les gouttelettes d'eau des gaz d'échappement (1) sortant du séparateur centrifuge.

9. Dispositif de traitement des gaz d'échappement selon l'une quelconque des revendications précédentes, **caractérisé en ce qu'**une électrode de pulvérisation (3) est présente dans l'agglomérateur (2).

10. Procédé de traitement de gaz d'échappement (1) provenant d'une petite installation de combustion, dans lequel un dispositif de traitement des gaz d'échappement selon la revendication 1 est utilisé, dans lequel, dans les gaz d'échappement (1), des particules sont d'abord au moins partiellement agglomérées dans un agglomérateur (2) et les gaz d'échappement sont ensuite intégralement acheminés vers un séparateur centrifuge (6), des particules étant séparées dans le séparateur centrifuge (6), un débit volumique souhaité étant réglé dans le séparateur centrifuge (6) en ce qu'une partie du débit volumique sortant à la sortie du séparateur centrifuge (6) est, si nécessaire, acheminée à l'entrée du séparateur centrifuge (6) vers le séparateur centrifuge (6).

11. Procédé selon la revendication 10, **caractérisé en ce que**, pour l'agglomération des particules, les gaz d'échappement sont au moins partiellement ionisés dans l'agglomérateur conçu sous la forme d'une chambre d'ionisation (2).

12. Procédé selon l'une quelconque des revendications 10 ou 11, **caractérisé en ce qu'**un liquide (13) est ajouté aux gaz d'échappement (1) avant ou lors de l'entrée des gaz d'échappement (1) dans le séparateur centrifuge.

13. Procédé selon la revendication précédente, **caractérisé en ce que** le liquide (13) ajouté contient de l'hydroxyde de calcium.

14. Procédé selon l'une quelconque des revendications 10 à 13, **caractérisé en ce que** le procédé est mis en œuvre à l'aide d'un dispositif de traitement des gaz d'échappement selon l'une quelconque des revendications 1 à 9.
